## Europäisches Patentamt
## European Patent Office
## Office européen des brevets

(11) Veröffentlichungsnummer: **0 166 093**
**B1**

(12) # EUROPÄISCHE PATENTSCHRIFT

(45) Veröffentlichungstag der Patentschrift:
01.07.87

(51) Int. Cl.⁴: **C 08 G 65/46, C 08 G 65/44**

(21) Anmeldenummer: **85104058.4**

(22) Anmeldetag: **03.04.85**

(54) **Verfahren zur Herstellung eines gegen Molekulargewichtsabbau geschützten Polyphenylenethers.**

(30) Priorität: **25.05.84 DE 3419601**

(43) Veröffentlichungstag der Anmeldung:
**02.01.86 Patentblatt 86/1**

(45) Bekanntmachung des Hinweises auf die Patenterteilung:
**01.07.87 Patentblatt 87/27**

(84) Benannte Vertragsstaaten:
**AT BE DE FR GB IT NL SE**

(56) Entgegenhaltungen:
**EP-A-0 098 929**
**EP-A-0 103 276**
**DE-A-2 430 130**
**DE-A-2 754 887**
**DE-A-2 755 937**

(73) Patentinhaber: **HÜLS AKTIENGESELLSCHAFT, - RSP Patente / PB 15 - Postfach 13 20, D-4370 Marl 1 (DE)**

(72) Erfinder: **Bartmann, Martin, Dr., Burgstrasse 35, D-4350 Recklinghausen (DE)**
Erfinder: **Burzin, Klaus, Dr., Wellerfeldweg 164, D-4370 Marl (DE)**
Erfinder: **Bevers, Klaus, Dr., Hubertustal 17, D-4421 Reken 4 (DE)**

LIBER, STOCKHOLM 1987

**0 166 093**

## Beschreibung

Polyphenylenether und Verfahren zu ihrer Herstellung sind bekannt. Sie werden z. B. in Bühler "Spezialplaste" (Akademieverlag, Berlin, 1978) sowie in den US-PSS 3 306 874 und 3 306 875 beschrieben.

Im industriellen Bereich haben sich die Verfahren durchgesetzt, bei denen di-ortho-substituierte Phenole in Gegenwart von Sauerstoff bzw. Sauerstoff enthaltenden Gasmischungen durch Übergangsmetall-amin-Komplexe oxidativ gekuppelt werden. Zur Herstellung des pulverförmigen Endprodukts sind drei Verfahrensschritte, nämlich das Abstoppen der Polykondensation, die Reinigung des Polymeren und die Isolierung des PPE erforderlich.

Das Abstoppen der Polykondensation kann - abhängig von den jeweiligen Reaktionsbedingungen - zweckmäßigerweise entweder durch Inaktivierung des Katalysators, durch Abtrennen des Katalysators oder durch Abtrennen des Polymeren erfolgen. In einzelnen Fällen bewirken diese Maßnahmen neben der Beendigung der Polykondensation eine wenn auch unvollständige Reinigung des Polymeren.

Die wichtigsten Methoden sind folgende:
1. Zugabe von wäßrigen Säuren,
2. Zugabe von Laugen,
3. Zugabe von Komplexbildnern für Kupferionen und
4. Zugabe von polaren Lösemitteln zur Abtrennung des Polymeren.

Die Zugabe wäßriger Säurelösungen dürfte das am häufigsten angewandte Verfahren zum Abstoppen der Polykondensation sein, obwohl der Verbrauch an Säure erheblich und die Abtrennung des Amins unbefriedigend sind (vgl. DE-OS 22 46 552, Seite 4, Zeilen 1 bis 8). Das Arbeiten in einer Extraktionsapparatur, beispielsweise im Gegenstrom zu einem wäßrigen Säurestrom und gegebenenfalls bei erhöhter Temperatur (DE-OS 21 05 372), stellt zwar verfahrensmäßig eine Verbesserung dar, erfordert aber erhebliche Mengen Alkalimetallhydroxide, um die Amine zurückzugewinnen.

Nach dem Verfahren der zurückgezogenen DE-OS 22 46 552 wird der PPO-Reaktionsansatz, der einen Kupferamin-Katalysator und das Polymere in einem aromatischen Lösemittel enthält, durch Behandlung mit $CO_2$/Wasser abgestoppt und aufgearbeitet. Die Abtrennung des Amins vom Polymeren ist indessen unbefriedigend, wie Beispiel A zeigt.

In der DE-OS 15 70 683 wird beschrieben, daß dem PPE-Reaktionsansatz 50 %ige Natriumhydroxidlösung zugesetzt wird. Dieses Verfahren hat sich nicht durchsetzen können, da es nicht zuverlässig die Polymerisation abbricht (vgl. DE-OS 24 30 130).

Mit Hilfe von Chelatisierungsmitteln kann ein Kupfer-Katalysator inaktiviert und abgetrennt werden (vgl. DE-PS 15 70 683, Spalte 15, Zeilen 3 bis 5, und DE-OS 26 40 147). Experimentelle Einzelheiten sind ferner der DE-OS 23 64 319 zu entnehmen. Der wesentliche Nachteil aller Verfahren, die mit Chelatisierungsmitteln arbeiten, ist der beobachtete Abbau des Polymeren. Es wurde festgestellt (vgl. DE-OS 27 54 887), daß Polyphenylenether umso schneller abgebaut werden, je höher die Temperatur ist, der sie unterworfen sind, und je mehr Zeit zwischen dem Ende der Reaktion und der Isolierung des Polymeren verstreicht. Beispielsweise nimmt der Viskositätsindex, der ein Maß für das mittlere Molekulargewicht der Polymereinheiten darstellt, bei einer Temperatur von 50°C üblicherweise um mehr als 0,1, nicht selten sogar um 0,2 dl/g, pro Stunde ab (DE-OS 27 54 887).

Auch durch den Einsatz spezieller Chelatisierungsmittel, wie z. B. der Polyamine in dem Verfahren der DE-OS 24 60 323, läßt sich dieser Abbau nicht vermeiden.

Es wurde vorgeschlagen, den Polymerlösungen neben dem Chelatisierungsmittel weitere Stabilisierungsmittel, wie z. B. zweiwertige Phenole und Reduktionsmittel (vgl. DE-OS 27 54 887 und DE-PS 26 16 746) oder aromatische Amine (vgl. DE-OS 27 55 937), zuzusetzen. Diese Lösungen vermögen indessen nicht zu befriedigen, da man die Zusatzstoffe in teilweise beträchtlichen Konzentrationen benötigt. Außerdem wird die Isolierung der Polyphenylenether dadurch zusätzlich erschwert.

Mit Hilfe von Alkoholen, Ketonen oder deren wäßrigen Lösungen, sogenannten "Antilösemitteln", kann die PPE-Polykondensation gestoppt und das Polymer ausgefällt werden, während Katalysatorreste und Diphenochinon im Lösemittel zurückbleiben. Doch können bereits geringe Mengen des Katalysators, die beim Polymeren verbleiben, dessen Farbqualität negativ beeinflussen und einen Abbau katalysieren (vgl. DE-OS 26 16 746).

Allen Fällungsverfahren (siehe z. B. DE-OSS 12 65 410, 25 32 477, 25 32 478, 26 55 161 und 27 52 867) ist gemeinsam, daß erhebliche Mengen an Lösemitteln eingesetzt, aufgearbeitet und redestilliert werden müssen. Man zieht es daher in der Praxis vor, die Polymeren nach einem sogenannten Direktisolationsverfahren zu gewinnen, beispielsweise durch Dampfabscheidung, Sprühtrocknung oder Heißwasserkrümelung. Für die Anwendung dieser Verfahren ist aber Vorraussetzung, daß die Reste des Übergangsmetall-Katalysators und andere Verunreinigungen vorher möglichst quantitativ abgetrennt worden sind (vgl. DE-OS 24 60 323).

Schließlich kann man die PPE-Reaktion auch durch gleichzeitige Behandlung mit einem zweiwertigen Phenol oder Benzochinon und einem milden Reduktionsmittel, wie z. B. $H_2S$ oder Hydrazin, abstoppen (vgl. DE-PS 24 30 130). Der Schrift ist zu entnehmen, daß das erhaltene Polymere innerhalb eines Tages keinem Molekulargewichtsabbau unterliegt. Die Reduktionsmittel allein zeigen keine Wirkung. So sinkt beispielsweise die Viskositätszahl beim Abstopen mit einem 30-fachen molaren Überschuß Hydrazin innerhalb eines Tages von 0,61 auf 0,44 dl/g (siehe Tabelle I, Versuch 7). Folgt man aber dem beanspruchten Verfahren, so macht sich der Zusatz der zweiwertigen Phenole bzw. Benzochinone störend bemerkbar, die nur schwer mikrobiell

2

abbaubar sind (siehe DE-OS 27 54 887).

Darüber hinaus wird in der DE-PS 15 70 683 erwähnt, daß man die PPE-Reaktion auch dadurch beenden kann, daß man das Kupfer als unlösliche Verbindung ausfällt und vor der Isolierung des Produkts abfiltriert. Der Fachmann wird bei diesem Heinweis möglicherweise an ein Ausfällen des Kupfersalzes durch Einleiten von $H_2S$ denken. Tatsächlich kommt es aber unter den Bedingungen der oxidativen Kupplungsreaktion nicht zum Ausfällen des an sich schwerlöslichen Kupfersulfides. Aus Versuchen der Anmelderin (siehe Vergleichsversuch A) geht eindeutig hervor, daß es entweder überhaupt nicht oder nur in sehr geringem Maße zur Ausfällung von Kupfersulfid kommt. Die Ursache für das Ausbleiben der Ausfällung ist unbekannt.

Tatsächlich ist der Anmelderin aus der Literatur kein Beispiel bekannt, wonach die PPE-Polykondensation allein durch Zugabe von Schwefelwasserstoff wirkungsvoll gestoppt werden könnte.

Ein Ziel der vorliegenden Erfindung war es, ein Verfahren zur Herstellung von Polyphenylenethern zu finden, bei dem die oxidative Kupplungsreaktion durch Zusatz von nur einem Agens gestoppt und das erhaltene Polymere gleichzeitig gegen Molekulargewichtsabbau geschützt werden kann. Das Verfahren sollte es ermöglichen, das Polymere weitgehend von Katalysatorrückständen und Nebenprodukten zu befreien und gleichzeitig den Katalysator in geeigneter Form abzutrennen. Insbesondere sollten die Anteile von Übergangsmetall und Chinon im Polymeren auf Werte unter 5 ppm bzw. 20 ppm besenkt werden. Darüber hinaus war ein Polymeres von farblich einwandfreier Qualität erwünscht, das unmittelbar einem Direktisolationsverfahren unterworfen werden kann.

Der vorliegenden Erfindung liegt die Erkenntnis zugrunde, daß Schwefelwasserstoff unter den Bedingungen der oxidativen Kupplungsreaktion von di-ortho-substituierten Phenolen nur dann als Fällungsmittel für die als Katalysatorkomponenten verwendeten Übergangsmetalle geeignet ist, wenn man dafür sorgt, daß kein Sauerstoff zugegen ist.

Es wurde jetzt gefunden, daß man die PPE-Polykondensation wirksam abstoppen und ein Polymeres der geforderten Qualität erhalten kann, wenn man nach Erreichen des vorgegebenen Polymerisationsgrades den PPE-Ansatz möglichst weitgehend von Sauerstoff befreit, lediglich mit $H_2S$ oder einer Sulfidionen enthaltenen Lösung versetzt und den erhaltenen Niederschlag abtrennt.

Weitere Gegenstände der Erfindung gehen aus den Ansprüchen 2 bis 11 hervor.

Polymerisationsverfahren zur Herstellung von PPE werden beispielsweise in den deutschen Offenlegungsschriften 32 24 691 und 32 24 692 beschrieben. Bezüglich experimenteller Einzelheiten wird auf diese Schriften und die darin zitierte Literatur verwiesen.

Als di-ortho-substituierte Phenole setzt man entweder 2,6-Diphenyl-phenol oder 2,6-Di-n-alkylphenole ein, deren Alkylrest 1 bis 6 C-Atome aufweisen. Bevorzugt wird 2,6-Dimethylphenol.

Bei dem für die Polykondensation verwendeten Katalysator handelt es sich üblicherweise um einen Komplex aus einem Übergangsmetall, wie Kupfer, Kobalt, Mangan oder Nickel, und einer zur Komplexbildung befähigten organischen Verbindung, wie z. B. Amine, insbesondere Ethanolamine, $\alpha,\omega$,-Hydroxyamine, Schiffsche Basen, insbesondere von Salicylaldehydderivaten, und Oxime.

Derartige Systeme werden beispielsweise in den DE-OSS 15 70 458 und 27 02 294, DE-PS 27 55 829 sowie BE-PS 831 664 beschrieben. Bevorzugt sind Komplexe aus Kupfersalzen und aliphatischen oder heterocyclischen Aminen, insbesondere Komplexe aus Kupfer-II-salzen und Morpholin.

Das Reaktionsmedium kann sehr unterschiedlicher Art sein (vgl. US-PS 3 306 874 und US-PS 3 306 875). Bevorzugt ist ein Lösemittelgemisch aus einem aromatischen Kohlenwasserstoff mit 6 bis 8 C-Atomen und einem aliphatischen Alkohol mit 1 bis 4 C-Atomen im Volumenverhältnis 92,5 : 7,5 bis 50 : 50 mit der Einschränkung, daß während der oxidativen Kupplungsreaktion kein Polyphenylenether ausfallen soll. Besonders bevorzugt sind Lösemittelgemische aus Methanol und Toluol.

Das Erreichen eines bestimmten Polymerisationsgrades kann auf verschiedene Weisen ermittelt werden. Man kann beispielsweise bekannte physikalisch-cheimische Meßmethoden, wie die der Viskositätsbestimmung, zur Kontrolle des Polymerisationsgrades einsetzen oder auch einfach eine bestimmte Reaktionszeit empirisch vorgeben.

Bei der Einleitung von Schwefelwasserstoff oder Zugabe der sulfidhaltigen Lösung soll möglichst wenig Sauerstoff im Gas- und Flüssigkeitsraum zugegen sein. Man erreicht dies zweckmäßigerweise dadurch, daß man den noch vorhandenen Sauerstoff oder das sauerstoffhaltige Reaktionsgas durch ein Inertgas, wie z. B. Stickstoff oder Argon, vertreibt. Man kann aber auch die zur Reaktion benötigte Menge Sauerstoff so einstellen, daß bei Erreichen des gewünschten Polymerisationsgrades praktisch die gesamte Menge verbraucht ist.

Der Schwefelwasserstoff kann in sehr unterschiedlicher Weise mit der Reaktionslösung in Kontakt gebracht werden.

Beispielsweise verwendet man Schwefelwasserstoff in gasförmiger Form. In diesem Fall kann man den Schwefelwasserstoff durch Zusatz von Inertgasen, wie Stickstoff, Kohlendioxid, Wasserstoff, Kohlenmonoxid etc., verdünnen. Die Gasgemische sollten wenigstens 2 % Schwefelwasserstoff enthalten.

Eine bevorzugte Ausführung des erfindungsgemäßen Verfahrens besteht darin, die Reaktionslösung bei 40 bis 70° C mit dem $H_2S$ enthaltenden Gas im Gleich- oder Gegenstrom in Kontakt zu bringen, das ausgefallene Metallsulfid in einen Fest-Flüssig-Separator abzutrennen und die erhaltene Polyphenylenetherlösung anschließend noch mit $H_2O$, bei einem Volumenverhältnis von organischer Phase zu $H_2O$, wie 20 : 1 bis 1 : 2, bei 20 bis 150° C, bevorzugt bei 40 bis 80° C, zu waschen. Selbstverständlich kann man diesen Waschvorgang auch unter Überdruck durchführen. Man kann jedoch auch die Behandlung der Polyphenylenetherlösung mit einem

3

$H_2S$ enthaltenden Gas und die Wäsche mit $H_2O$ in einem Schritt durchführen.

Der Schwefelwasserstoff dann aber auch in Form seiner vorzugsweise wäßrigen Lösung mit dem Reaktionsansatz in Kontakt gebracht werden. Anstelle der schwefelwasserstoffsauren Lösungen können auch die Lösungen löslicher Metallsulfide, insbesondere die der Alkali- und Erdalkalisulfide, eingesetzt werden. Derartige Lösungen sollten zumindest 0,1 Mol Sulfid pro Liter Lösung enthalten.

Die Sulfidquelle wird in einer solchen Menge eingesetzt, daß auf 1 Mol Übergangsmetallverbindung vorzugsweise 1 bis 10 Mole, insbesondere 2 bis 5 Mole, Sulfid kommen.

Die Umsetzung mit Schwefelwasserstoff bzw. den sulfidhaltigen Lösungen erfolgt im Temperaturbereich zwischen 20 und 100°C. Beispielsweise setzt man erst dem Reaktionsansatz die gewünschte Menge sulfidhaltiger Lösung zu, erwärmt auf eine Temperatur zwischen 40 und 70°C, hält die Reaktionsmischung 10 bis 20 Minuten bei dieser Temperatur und zentrifugiert sodann den gebildeten Niederschlag ab.

Der erhaltene Niederschlag wird abgetrennt. Es bietet sich an, ihn einfach abzufiltrieren. Die Abtrennung kann aber auch mit Hilfe einer Zentrifuge, eines Separators oder eines Dekanters erfolgen.

Bei einer batch-weisen Herstellung der Polyphenylenether unterbricht man die Polykondensation beim gewünschten Umsatz durch Verdrängen des sauerstoffhaltigen Reaktionsgases, setzt Schwefelwasserstoff zu und bringt die Reaktionsmischung auf die gewünschte Temperatur. Nach 1 bis 30 Minuten entfernt man den gebildeten Niederschlag z. B. durch Zentrifugieren.

Bei der kontinuierlich durchgeführten oxidativen Kupplungsreaktion kann in den Austrag der letzten Reaktionsstufe, vorzugsweise direkt in einem geeigneten Mischelment, $H_2S$ eingeleitet und auf die gewünschte Temperatur gebracht werden, wenn der Sauerstoffgehalt der füssigen Phase durch geeignete Dosierung der Sauerstoffzufuhr unter $6 - 10^{-3}$ Mol/l gesenkt werden kann. In einem kontinuierlich arbeitenden Apparat, wie z. B einem Separator oder einem Vollmanteldekanter, kann dann der metallhaltige Niederschlag abgetrennt werden.

Der besondere Vorteil dieses Verfahrens besteht darin, daß der Metallanteil des Katalysators, ausgehend von Konzentrationswerten, die in der Regel zwischen 500 und 5 000 ppm liegen, in einem Schritt auf Werte unter 5 ppm reduziert wird und zusätzlich das anfallende, feste Metallsulfid leicht (z. B. durch Rösten und anschließendes Auflösen in Säure) wieder in einen einsetzbaren Katalysator zurückverwandelt werden kann, ohne daß die Notwendigkeit besteht, die sonst anfallenden wäßrigen sauren, alkalischen oder Chelatisierungsmittel enthaltenden Stopplösungen in einer gesonderten Stufe zur Rückgewinnung des Metalls aufarbeiten zu müssen. Diese Aufarbeitung aber ist zur Rückgewinnung der teuren Chelatisierungsmittel und zur Vermeidung von Umweltbelastungen durch metallhaltige Abwässer notwendig. Dies gilt insbesondere für das in Bezug auf Mikroorganismen stark toxische Kupfer.

Überraschend an dem erfindungsgemäßen Verfahren ist, daß die Chinongehalte der Polyphenylenetherlösungen deutlich reduziert werden und kein Abbau des Molekulargewichts beim Erhitzen oder längeren Lagern der so hergestellten Lösungen eintritt.

Will man die reinen Polyphenylenether gewinnen, so kann dies durch die bekannten Fällverfahren mittels Zugabe größerer Mengen eines Nichtlösemittels für die Polyphenylenether erreicht werden. Aufgrund der extremen Reinheit und der Stabilität der erfindungsgemäß hergestellten Polyphenylenetherlösungen sind jedoch die bekannten Direktisolationsverfahren, wie z. B. die sogenannten Heißwasserzerkrümelung oder die Sprühtrocknung, die Aufarbeitungsmethoden der Wahl. Für spezielle Anwendungen, wie z. B. die Herstellung von Mischungen von Polyphenylenethern und Polystyrol, genügt es auch, die hergestellten Lösungen durch Eindampfen aufzukonzentrieren und anschließend mit dem Polystyrol und gegebenenfalls zusätzlichen Zusatzstoffen, wie Verarbeitungshilfsmitteln, Flammschutzmitteln, Stabilisatoren und Pigmenten, zu mischen (vgl. deutsche Patentanmeldung P 33 37 629.8 = O. Z. 3950).

Der in den Beispielen angegebene J-Wert gibt die relative Viskositätsänderung einer 0,5 %igen Lösung des Polymeren in Chloroform bei 25°C im Vergleich zum reinen Lösemittel entsprechend DIN 53 728 an.

**Beispiel 1**

Katalysatorherstellung:
Man löst 1,95 g $CuCO_3 \cdot Cu(OH)_2$ in 5,7 g Bromwasserstoffsäure (48-%ig) auf und gibt die erhaltene homogene Lösung unter Rühren zu 30 g Morpholin.

Herstellung von Poly-(2,6-dimethyl-1,4-phenylenoxid):
In einem 3-l-Rührreaktor vereinigt man die oben hergestellte Katalysatorlösung mit einer Mischung aus 1 300 g Toluol und 207 g Methanol, gibt 30 g einer 50 %igen Lösung von 2,6-Dimethylphenol (DMP) in Toluol hinzu und startet die Polykondensation unter Rühren (750 U/min) durch Einleiten eines Luftstroms von 200 l/h. Die Reaktionstemperatur wird konstant auf 30°C gehalten. Nach 10 Minuten tropft man weitere 270 g der toluolischen DMP-Lösung über einen Zeitraum von 30 Minuten zu. 30 Mintuen nach der letzten Phenolzugabe ersetzt man den Luftstrom durch einen Stickstoffstrom von 100 l/h.

Nach fünfminütiger Stickstoffspülung leitet man $H_2S$ (20 l/h) ein und erwärmt die Reaktionsmischung auf 45°C. Nach 20 Minuten stellt man die Gaszufuhr ab und zentrifugiert das ausgefallene CuS ab. Anschließend rührt man die so erhalteneene Polymerlösung 60 Minuten bei 60°C mit 425 ml $H_2O$. Nach Phasentrennung isoliert man danach den Polyphenylenether durch Zugabe von 1 500 ml Methanol.

4

1. J-Wert (nach Abtrennen des CuS) = 55 ml/g
2. J-Wert (im Endprodukt) = 55 ml/g
3. Kupfergehalt (im Endprodukt) = < 2 ppm
4. Chinongehalt (UV-Absorption bei 420 mn einer 1 %igen Lösung nach Abtrennen des CuS) = < 0,2 Mg/l
5. Chinogehalt (im gefällten Produkt) = <20 ppm
6. Morpholingehalt der organischen Phase nach $H_2O$-Wäsche) = 0,1 %

Die wäßrige Phase enthält 5 ppm Cu.

Läßt man die Reaktionsmischung nach Abtrennung des Kupfersulfids 24 Stunden stehen und isoliert dann das Polymere in der angegebenen Weise, so wird gleichfalls ein J-Wert von 55 ml/g erhalten.

**Beispiel 2**

Wie Beispiel 1, jedoch ersetzt man die Stockstoffspülung durch zehnminütiges Einleiten von $CO_2$ (150 l/h). Analysenwerte 1 bis 5 ebenso wie in Beispiel 1.

6. Morpholingehalt der organischen Phase = < 0,02 %.

**Beispiel 3**

Wie Beispiel 1, jedoch nimmt man die $H_2S$-Behandlung bei 35°C vor, als Lösemittel benutzt man ein Gemisch aus 1 490 g Toluol und 166 g Methanol, und anstelle von DMP setzt man 170 g 2,6-Diethylphenol ein. Analysenwerte 1 bis 6 wie in Beispiel 1.

**Beispiel 4**

In der in Beispiel 1 beschriebenen Apparatur legt man 1 300 g Toluol, 200 g Methanol und 15 g Morpholin vor und gibt anschließend unter Rühren (750 U/min) eine Lösung von 0,6 g $MnCl_2$ und 2,5 g Benzoinoxim in 10 ml Methanol zu. Nach Zugabe von 6 g 50 %iger wäßriger Natriumhydroxid-Lösung leitet man Luft (200 l/h) ein und tropft 300 g einer 50 %igen Lösung von DMP in Toluol über einen Zeitraum von 30 Minuten zu. 30 Minuten nach der letzten DMP-Zugabe unterbricht man die Luftzufuhr und spült 5 Minuten mit Stickstoff (100 l/h). Anschließend leitet man 15 Minuten eine Mischung aus $CO_2$ (180 l/h) und $H_2S$ (20 l/h) ein und erwärmt die Mischung dabei auf 55°C. Danach zentrifugiert man das fleischfarbene MnS ab. Anschließend wird die manganfreie Polymerlösung mit 400 ml $H_2O$ bei 80°C 60 Minuten gerührt. Nach der Phasentrennung isoliert man das Produkt durch Fällung mit 1 500 g Methanol.

1. J-Wert (nach Abtrennen des MnS) = 57 ml/g
2. J-Wert (im Endprodukt.) = 57 ml/g
3. Mangangehalt (im Endprodukt) = <5 ppm
4. Chinongehalt (UV-Absorption bei 420 nm einer 1 %igen Lösung nach Abtrennen des MnS) = 1 mg/l
5. Chinongehalt (im Endprodukt) = 50 ppm

Läßt man die Reaktionsmischung nach Abtrennung des Mangansulfids 24 Stunden stehen und isoliert dann das Polymere in der angegebenen Weise, so wird gleichfalls ein J-Wert von 57 ml/g erhalten.

**Beispiel A**

Wie Beispiel 1, jedoch stellt man 30 Minuten nach Beendigung der DMP-Zugabe die Luftzufuhr nicht ab, sondern leitet 10 Minuten $H_2S$ (20 l/h) und Luft ein. Es fällt kein CuS aus. Aufarbeitung wie Beispiel 1.
1. J-Wert = 55 ml/g
2. J-Wert = 51 ml/g

5

3. Kupfergehalt = 20 ppm
4. Chinongehalt = 35 mg/l
5. Chinongehalt = 200 ppm

Die wäßrige Phase enthält 1 600 ppm Cu.

**Patentansprüche**

1. Verfahren zur Herstellung eines gegen Molekulargewichtsabbau geschützten Polyphenylenethers durch Abstoppung der übergangsmetallkatalysierten oxidativen Kupplungsreaktion von di-orthosubstituierten Phenolen und Abtrennung der Metallkomponente, dadurch gekennzeichnet, daß man

a. den für die Kupplungsreaktion erforderlichen Sauerstoff entfernt,

b. die Reaktionslösung allein mit Schwefelwasserstoff oder einer Sulfidionen enthaltenden Lösung in Kontakt bringt und

c. den erhaltenen Niederschlag abtrennt.

2. Verfahren nach Anspruch 1, dadurch gekennzeichnet, daß man den vorhandenen Sauerstoff oder das sauerstoffhaltige Reaktionsgas mit Hilfe eines Inertgases, wie z. B. Stickstoff oder Argon, vertreibt.

3. Verfahren nach den Ansprüchen 1 und 2, dadurch gekennzeichnet, daß man die für die oxidative Kupplungsreaktion benötigte Menge Sauerstoff so einstellt, daß bei Erreichen des gewünschten Polymerisationsgrades praktisch die gesamte Menge verbraucht ist.

4. Verfahren nach den Ansprüchen 1 bis 3, dadurch gekennzeichnet, daß man die Reaktionslösung bei einer Temperatur von 20 bis 100°C, vorzugsweise 40 bis 70°C, mit Schwefelwasserstoff oder einer Sulfidionen enthaltenden Lösung in Kontakt bringt.

5. Verfahren nach den Ansprüchen 1 bis 4, dadurch gekennzeichnet, daß das Molverhältnis zwischen eingesetztem Sulfid und Übergangsmetallverbindung zwischen 1 : 1 und 10 : 1, vorzugsweise zwischen 2 : 1 und 5 : 1, liegt.

6. Verfahren nach den Ansprüchen 1 bis 5, dadurch gekennzeichnet, daß man als Katalysator einen Kupfer-II-Amin-Komplex einsetzt.

7. Verfahren nach Anspruch 6, dadurch gekennzeichnet, daß der Aminbestandteil des Katalysators Morpholin ist.

8. Verfahren nach den Ansprüchen 1 bis 7, dadurch gekennzeichnet, daß man als di-ortho-substituiertes Phenol 2,6-Dimethylphenol einsetzt.

9. Verfahren nach Anspruch 6, dadurch gekennzeichnet, daß man als Lösemittel ein Gemisch aus einem aromatischen Kohlenwasserstoff mit 6 bis 8 C-Atomen und einem aliphatischen Alkohol mit 1 bis 4 C-Atomen im Volumenverhältnis 92,5 : 7,5 bis 50 : 50 verwendet.

10. Verfahren nach Anspuch 9, dadurch gekennzeichnet, daß man ein Lösemittelgemisch aus Methanol und Toluol verwendet.

11. Verfahren nach den Ansprüchen 1 bis 10, dadurch gekennzeichnet, daß man die nach Abtrennung des Metallsulfids erhaltene Polyphenylenetherlösung mit Wasser bei 20 bis 150°C, bevorzugt bei 40 bis 80°C, wäscht.

**Claims**

1. A process for the production of a polyphenylene ether protected against molecular weight degradation comprising terminating the oxidative coupling of a di-orthosubstituted phenol which has been catalysed by a transition metal catalyst and separating the metal component(s), characterised in that

a. the oxygen necessary for the coupling reaction is removed,

b. the reaction solution is brought into contact only with hydrogen sulphide or a sulphide-ion-containing solution, and

c. the resulting precipitate is separated off.

2. A process according to claim 1, characterised in that the oxygen present or the oxygen-containing reaction gas is driven off with the aid of an inert gas, for example nitrogen or argon.

3. A process according to claim 1 or 2, charactierised in that the amount of oxygen required for the oxidative coupling reaction in introduced in such a way that when the desired degree of polymerisation is achieved practically the entire amount has been consumed.

4. A process according to any of claims 1 to 3, charactierised in that the reaction solution is brought into contact with hydrogen sulphide or a sulphide-ion-containing solution at a temperature of 20 to 100°C, preferably 40 to 70°C.

5. A process according to any of claims 1 to 4, characterised in that the mole ration of added sulphide to transition metal compoud is form 1:1 to 10:1, preferably from 2:1 to 5:1.

6. A process according to any of claims 1 to 5, characterised in that a copper (II) amine complex is introduced as catalyst.

7. A process according to claim 6, characterised in that the amine moiety of the catalyst is morpholine.

8. A process according to any of claims 1 to 7, characterised in that 2,6-dimethylphenol is introduced as di-ortho-substituted phenol.

9. A process according to claim 6, characterised in that a mixture of an aromatic hydrocarbon of 6 to 8, carbon atoms and an aliphatic alcohol of 1 to 4 carbon atoms in a volume ratio of from 92.5 : 7.5 to 50 : 50 is used as solvent.

10. A process according to claim 9, characterised in that a solvent mixture of methanol and toluene is used.

11. A process according to any of claims 1 to 10, characterised in that after separation of the metal sulphide the polyphenylene ether solution obtained is washed with water at 20 to 150°C, preferably 40 to 80°C.

## Revendications

1. Procédé de préparation d'un éther polyphénylenique protégé contre une dégradation du poids moléculaire par arrêt de la réaction de copulation oxydante (catalysée par des métaux de transition) de phénols ortho-disubstitués et par séparation des composants métalliques,
caractérisé par le fait
a) que l'on élimine l'oxygène nécessaire pour la réaction de copulation,
b) que l'on met la solution de la réaction seule en contact avec de l'hydrogène sulfuré ou une solution renfermant des ions sulfure, et
c) que l'on sépare le précipité obtenu.

2. Procédé selon la revendication 1, caractérisé par le fait que l'on chasse l'oxygène présent, ou le gaz réactionnel renfermant de l'oxygène, à l'aide d'un gaz inerte, tel que l'azote ou l'argon, par exemple.

3. Procédé selon les revendications 1 et 2, caractérisé par le fait qu'on ajuste la quantité d'oxygène nécessaire pour la réaction oxydante de copulation, de manière telle que lorsque l'on atteint le degré de polymérisation désiré, la quantité globale soit pratiquement consommée.

4. Procédé selon les revendications 1 à 3, caractérisé par le fait qu'à une température de 20 à 100°C, de préférence de 40 à 70°C, on met la solution réactionnelle en contact avec de l'hydrogène sulfuré ou avec une solution renfermant des ions sulfure.

5. Procédé selon les revendications 1 à 4, caractérisé par le fait que le rapport molaire entre le sulfure utilisé et le composé de métal de transition se situe entre 1 : 1 et 10 : 1, de préférence entre 2 : 1 et 5 : 1.

6. Procédé selon les revendications 1 à 5, caractérisé par le fait que l'on utilise comme catalyseur un complexe de cuivre-(11) et une amine.

7. Procédé selon la revendication 6, caractérisé par le fait que le constituant amine du catalyseur est la morpholine.

8. Procédé selon les revendications 1 à 7, caractérisé par le fait qu'on utilise le phénol di-ortho-substitué qu'est le 2,6-diméthyl-phénol.

9. Procédé selon la revendication 6, caractérisé par le fait que l'on utilise comme solvant un mélange d'un hydrocarbure aromatique comportant de 6 à 8 atomes de carbone et d'un alcool aliphatique comportant de 1 à 4 atomes de carbone, dans un rapport volumétrique de 92,5 : 7,5 à 50 : 50.

10. Procédé selon la revendication 9, caractérisé par le fait que l'on utilise un mélange solvant formé de méthanol et de toluène.

11. Procédé selon les revendications 1 à 10, caractérisé par le fait qu'on lave avec de l'eau, à une température de 20 à 150°C, de préférence de 40 à 80°C, la solution d'éther polyphénylénique obtenue après séparation du sulfure metallique.